# EUROPEAN PATENT SPECIFICATION

(11) **EP 0 408 192 B1**
(45) Date of publication and mention of the grant of the patent: **28.12.1994**
(21) Application number: 90306394.9
(22) Date of filing: 12.06.1990
(51) Int. Cl.: C09B 69/04, C09B 67/22, C09D 11/00, C09B 35/46

(54) **Solvent soluble dye**
In Lösungsmitteln löslicher Farbstoff
Colorant soluble dans les solvants

(30) Priority: 12.07.1989 GB 8915960
(43) Date of publication of application: 16.01.1991
(73) Proprietor: ZENECA LIMITED, London W1Y 6LN (GB)
(72) Inventor: Greenwood, David, Oldham, Lancashire Ol2 7NB (GB); Gregory, Peter, Bolton BL3 4UN (GB); Presgrave, John Edward, Todmorden, West Yorkshire OL4 8HP (GB)
(74) Representative: Pugsley, Roger Graham

(56) References cited:
- EP-A- 0 005 222
- EP-A- 0 212 345
- FR-A- 2 009 830
- CHEMICAL ABSTRACTS, vol. 100, no. 22, May 1984, pages 97-98, abstract no.176668w, Columbus, Ohio, US; &JP-A-58 213 069 (RICOH CO., LTD) 10-12-1983

## Description

This specification describes an invention relating to a salt of a direct black dye with an amine, having enhanced solubility in certain polar organic liquids, and its use in inks for conventional and hot melt ink-jet printing and automatic identification (AI), as a black colorant for toners and thermal wax transfer sheets and as a charge control agent (CCA) for electrophotographic toners.

EP-A-212345 discloses substantially aqueous compositions containing lithium or mono-, di- or tri-(mono- or poly-oxyalkylene)-ammonium salts of trisazo direct dyes, including C.I. Direct Black 168.

According to the present invention there is provided a compound or mixture of compounds of the Formula (1): 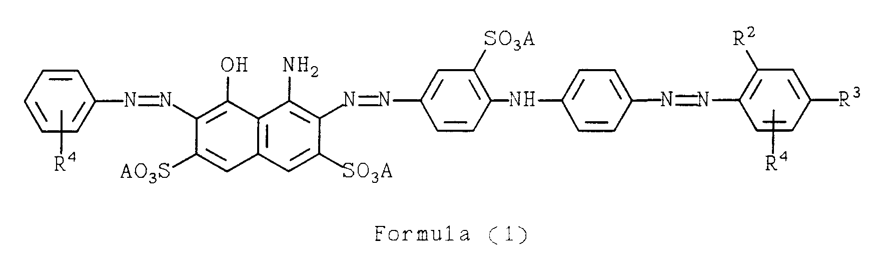
wherein:
- R: is H, C₁₋₄-alkyl, C₁₋₄-alkoxy, aryl, C₄₋₈-cycloalkyl, -CN, -NO₂, halogen, -COOR¹, -OH, -SH or -SO₃A;
- R¹: is A, C₁₋₄-alkyl or aryl;
- R²: is -NH₂, -OH or -SO₃A;
- R³: is -NH₂ or -OH;
- R⁴: is -NH₂, -OH, -SO₃A or H; and
- A: is NQ₄ in which at least one Q is a branched chain, fatty C₆₋₂₀-aliphatic group and 2 or 3 Qs each independently represents H, C₁₋₄-alkyl, phenyl or benzyl.

It is especially preferred that at least one, and more preferably three, of the groups represented by Q is H.

The fatty aliphatic group represented by Q preferably contains from 6 to 12, more preferably from 8 to 11, and especially preferably 8 to 10, carbon atoms. Preferred fatty aliphatic groups are alkyl and alkenyl and more especially such groups in which the carbon chain contains at least one branch and more especially from 2 to 4 branches. Preferred alkyl groups, represented by Q, containing 8 or 9 carbon atoms, are 3,5,5-trimethylhexyl, 1,1,3,3-tetramethylbutyl and 2-ethylhexyl. Examples of other aliphatic chains are 1-ethyl-3-methylpentyl, 1,5-dimethylhexyl, 1-methylheptyl, 1,4-dimethylheptyl, 1,2,2-trimethylpropyl, 2-ethylbutyl, 1-propylbutyl, 1,2-dimethylbutyl, 2-methylpentyl, 1-ethylpentyl, 1,4-dimethylpentyl, 1-methylhexyl, 3-methylhexyl, 1,3,3-trimethylbutyl, 1-methylnonyl. The substituted ammonium preferably carries one fatty alkyl group as described above the remaining groups being preferably H, C₁-₄-alkyl, especially, methyl. It is, however, preferred that at least one, and more preferably all three, of the remaining groups represented by Q is H. Suitable ammonium groups are 2-ethylhexyl-ammonium, 1,1,3,3-tetramethylbutyl-ammonium, 3,5,5-trimethylhexyl-ammonium and 1-methylheptyl-ammonium.

It is preferred that in dyes of Formula (1) R is -H, R² is -NH₂, R³ is -OH and R⁴ is -H or R is -H, R² is -OH, R³ is -NH₂ and R⁴ is -H and mixtures of these two isomeric dyes are especially preferred.

The amine salts of the present invention are conveniently prepared by mixing an aqueous solution of an alkali metal salt, preferably the sodium salt, of the compound of Formula (1) with an aqueous solution of the amine salt, preferably the hydrochloride, to cause precipitation of the amine salt of the compound of Formula (1).

The compound of Formula (1) has generally good solubility in polar organic media, especially lower alkanols, such as methanol, ethanol and n-propanol, and glycols especially C₂₋₄-glycols, such as ethylene glycol, diethylene glycol and propylene glycol, and is particularly suitable for the preparation of inks in such media, especially inks for use in ink-jet printing equipment.

Two or more different amines may be used to prepare mixed amine salts, such salts generally having higher solubility and greater solution stability.

The invention is further illustrated by the following examples in which all parts and percentages are by weight unless otherwise indicated.

### Example 1

A mixture of 48.5 parts of 1,1,3,3-tetramethylbutylamine and 300 parts of distilled water was neutralised to pH 7.0 by the addition of concentrated hydrochloric acid. 112.4 parts of CI Direct Black 168 was added to 1500 parts of distilled water and the pH adjusted to 7.0 by addition of aqueous sodium hydroxide solution. The solution was warmed to 45-50°C and the above amine hydrochloride solution added dropwise with stirring over 15 minutes and then stirred for a further 30 minutes at 45-50°C. The product was isolated by filtration, washed with distilled water and dried.

At 25°C the product was readily soluble in ethanol (10% wt/vol), n-propanol (10% wt/vol) but almost insoluble in water (<0.5% wt/vol).

### Example 2

This was prepared using the procedure for Example 1 except that 54 parts of 3,5,5-trimethylhexylamine were used in place of the 1,1,3,3-tetramethylbutylamine.

At 25°C the product was readily soluble in ethanol (15% wt/vol), n-propanol (10% wt/vol) but almost insoluble in water.

### Example 3

This was prepared using the procedure for Example 1 except that 48.5 parts of 2-ethylhexylamine were used in place of the 1,1,3,3-tetramethylbutylamine.

At 25°C the product was readily soluble in ethanol (10% wt/vol), n-propanol (4% wt/vol) but almost insoluble in water (<0.5% wt/vol).

### Example 4

In place of the 48.5 parts of 1,1,3,3-tetramethylbutylamine used in Example 1 there was used 48.5 parts of 1,5-dimethylhexylamine. The product was soluble in methanol, ethanol and n-propanol.

### Example 5

In place of the 112.4 parts of CI Direct Black 168 used in Example 2 there was used 112.4 parts of 1-amino-2-(4-[4-(2,4-diaminophenylazo)phenylamino]-3-sulphophenylazo)-3,6-disulpho-8-hydroxy-7-phenylazonaphthalene. The product dissolved in methanol, ethanol and n-propanol.

### Example 6

In place of the 112.4 parts of CI Direct Black 168 used in Example 2 there was used 125 parts of 1-amino-2-(4-[4-(2,4-diamino-5-sulphophenylazo)phenylamino]-3-sulphophenylazo)-3,6-disulpho-8-hydroxy-7-phenylazonaphthalene and in place of the 54 parts of 3,5,5-trimethylhexylamine there was used 72 parts. The product was soluble in methanol, ethanol and n-propanol.

### Example 7

In place of the 112.4 parts of CI Direct Black 168 used in Example 2 there was used 114.2 parts of a mixture of 1-amino-2-(4-[4-(4-amino-2-hydroxyphenylazo)phenylamino]-3-sulphophenylazo)-3,6-disulpho-8-hydroxy-7-(4-methylphenylazo)-naphthalene and 1-amino-2-(4-[4-(2-amino-4-hydroxyphenylazo)phenylamino]-3-sulphophenylazo)-3,6-disulpho-8-hydroxy-7-(4-methylphenylazo)-naphthalene. The product dissolved in methanol, ethanol and n-propanol.

### Example 8

In place of the 112.4 parts of CI Direct Black 168 used in Example 2 there was used 116.2 parts of a mixture of 1-amino-2-(4-[4-(4-amino-2-hydroxyphenylazo)phenylamino]-3-sulphophenylazo)-3,6-disulpho-8-hydroxy-7-(3-methoxyphenylazo)-naphthalene and 1-amino-2-(4-[4-(2-amino-4-hydroxyphenylazo)phenylamino]-3-sulphophenylazo)-3,6-disulpho-8-hydroxy-7-(3-methoxyphenylazo)-naphthalene. The product dissolved in methanol, ethanol and n-propanol.

### Example 9

In place of the 112.4 parts of CI Direct Black 168 used in Example 2 there was used 118 parts of a mixture of 1-amino-2-(4-[4-(4-amino-2-hydroxyphenylazo)phenylamino]-3-sulphophenylazo)-3,6-disulpho-8-hydroxy-7-(4-nitrophenylazo)-naphthalene and 1-amino-2-(4-[4-(2-amino-4-hydroxyphenylazo)phenylamino]-3-sulphophenylazo)-3,6-disulpho-8-hydroxy-7-(4-nitrophenylazo)-naphthalene. The product was soluble in methanol, ethanol and n-propanol.

### Example 10

In place of the 112.4 parts of CI Direct Black 168 used in Example 2 there was used 116.7 parts of a mixture of 1-amino-2-(4-[4-(4-amino-2-hydroxyphenylazo)phenylamino]-3-sulphophenylazo)-3,6-disulpho-8-hydroxy-7-(4-chlorophenylazo)-naphthalene and 1-amino-2-(4-[4-(2-amino-4-hydroxyphenylazo)phenylamino]-3-sulphophenylazo)-3,6-disulpho-8-hydroxy-7-(4-chlorophenylazo)-naphthalene. The product was soluble in methanol, ethanol and n-propanol.

### Example 11

In place of the 112.4 parts of CI Direct Black 168 used in Example 2 there was used 125 parts of a mixture of 1-amino-2-(4-[4-(4-amino-2-hydroxyphenylazo)phenylamino]-3-sulphophenylazo)-3,6-disulpho-8-hydroxy-7-(4-sulphophenylazo)-naphthalene and 1-amino-2-(4-[4-(2-amino-4-hydroxyphenylazo)phenylamino]-3-sulphophenylazo)-3,6-disulpho-8-hydroxy-7-(4-sulphophenylazo)-naphthalene and in place of the 54 parts of 3,5,5-trimethylhexylamine there was used 72 parts. The product was soluble in methanol, ethanol and n-propanol.

### Example 12

In place of the 112.4 parts of CI Direct Black 168 used in Example 2 there was used 117.9 parts of a mixture of 1-amino-2-(4-[4-(4-amino-2-hydroxyphenylazo)phenylamino]-3-sulphophenylazo)-3,6-disulpho-8-hydroxy-7-(3-carboxyphenylazo)-naphthalene and 1-amino-2-(4-[4-(2-amino-4-hydroxyphenylazo)phenylamino]-3-sulphophenylazo)-3,6-disulpho-8-hydroxy-7-(3-carboxyphenylazo)-naphthalene and in place of the 54 parts of 3,5,5-trimethylhexylamine there was used 72 parts. The product was soluble in methanol, ethanol and n-propanol.

### Example 13

In place of the 48.5 parts of 1,1,3,3-tetramethylbutylamine used in Example 1 there was used 48.5 parts of 1-methylheptylamine. The product was soluble in methanol, ethanol and n-propanol.

### Example 14

In place of the 112.4 parts of CI Direct Black 168 used in Example 2 there was used 112.4 parts of 1-amino-2-(4-[4-(2,4-dihydroxyphenylazo)phenylamino]-3-sulphophenylazo)-3,6-disulpho-8-hydroxy-7-phenylazonaphthalene. The product was soluble in methanol, ethanol and n-propanol.

### Example 15

In place of the 112.4 parts of CI Direct Black 168 used in Example 2 there can be used 122.5 parts of a mixture of 1-amino-2-(4-[4-(4-amino-2-hydroxyphenylazo)phenylamino]-3-sulphophenylazo)-3,6-disulpho-8-hydroxy-7-(4-cyclohexylphenylazo)-naphthalene and 1-amino-2-(4-[4-(2-amino-4-hydroxyphenylazo)phenylamino]-3-sulphophenylazo)-3,6-disulpho-8-hydroxy-7-(4-cyclohexylphenylazo)-naphthalene.

### Example 16

In place of the 112.4 parts of CI Direct Black 168 used in Example 2 there can be used 115.5 parts of a mixture of 1-amino-2-(4-[4-(4-amino-2-hydroxyphenylazo)phenylamino]-3-sulphophenylazo)-3,6-disulpho-8-hydroxy-7-(4-cyanophenylazo)-naphthalene and 1-amino-2-(4-[4-(2-amino-4-hydroxyphenylazo)phenylamino]-3-sulphophenylazo)-3,6-disulpho-8-hydroxy-7-(4-cyanophenylazo)-naphthalene.

### Example 17

In place of the 112.4 parts of CI Direct Black 168 used in Example 2 there can be used 114.4 parts of a mixture of 1-amino-2-(4-[4-(4-amino-2-hydroxyphenylazo)phenylamino]-3-sulphophenylazo)-3,6-disulpho-8-hydroxy-7-(4-hydroxyphenylazo)-naphthalene and 1-amino-2-(4-[4-(2-amino-4-hydroxyphenylazo)phenylamino]-3-sulphophenylazo)-3,6-disulpho-8-hydroxy-7-(4-hydroxyphenylazo)-naphthalene.

### Example 18

In place of the 112.4 parts of CI Direct Black 168 used in Example 2 there can be used 116.3 parts of a mixture of 1-amino-2-(4-[4-(4-amino-2-hydroxyphenylazo)phenylamino]-3-sulphophenylazo)-3,6-disulpho-8-hydroxy-7-(4-mercaptophenylazo)-naphthalene and 1-amino-2-(4-[4-(2-amino-4-hydroxyphenylazo)phenylamino]-3-sulphophenylazo)-3,6-disulpho-8-hydroxy-7-(4-mercaptophenylazo)-naphthalene.

### Example 19

In place of the 112.4 parts of CI Direct Black 168 used in Example 2 there can be used 119.5 parts of a mixture of 1-amino-2-(4-[4-(4-amino-2-hydroxyphenylazo)phenylamino]-3-sulphophenylazo)-3,6-disulpho-8-hydroxy-7-(4-methoxycarbonylphenylazo)-naphthalene and 1-amino-2-(4-[4-(2-amino-4-hydroxyphenylazo)phenylamino]-3-sulphophenylazo)-3,6-disulpho-8-hydroxy-7-(4-methoxycarbonylphenylazo)-naphthalene.

### Example 20

In place of the 112.4 parts of CI Direct Black 168 used in Example 2 there can be used 121.8 parts of a mixture of 1-amino-2-(4-[4-(4-amino-2-hydroxyphenylazo)phenylamino]-3-sulphophenylazo)-3,6-disulpho-8-hydroxy-7-(4-biphenylazo)-naphthalene and 1-amino-2-(4-[4-(2-amino-4-hydroxyphenylazo)phenylamino]-3-sulphophenylazo)-3,6-disulpho-8-hydroxy-7-(4-biphenylazo)-naphthalene.

## Claims

1. A compound of Formula (1): 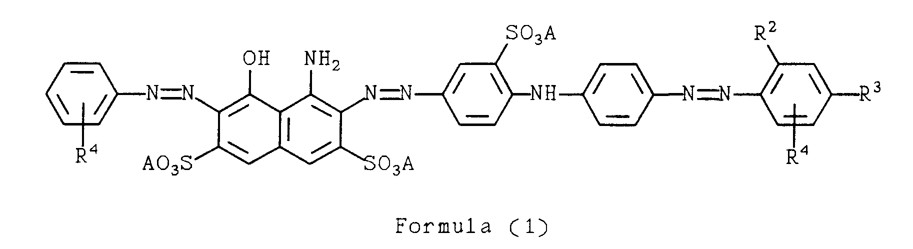 wherein
R is H, C₁₋₄-alkyl, C₁₋₄-alkoxy, aryl, C₄₋₈-cycloalkyl, -CN, -NO₂, halogen, -COOR¹, -OH, -SH or -SO₃A;
R¹ is A, C₁₋₄-alkyl or aryl;
R² is -NH₂, -OH or -SO₃A;
R³ is -NH₂ or -OH;
R⁴ is -NH₂, -OH, -SO₃A or H; and
A is NQ₄ in which at least one Q is a branched chain, fatty C₆₋₂₀-aliphatic group and 2 or 3 Qs each independently represents H, C₁₋₄-alkyl, phenyl or benzyl.

2. A compound according to Claim 1 in which at least one Q is a branched chain fatty C₆₋₁₂-aliphatic group.

3. A compound according to Claim 1 in which at least one Q is a branched chain fatty C₈₋₁₀-aliphatic group.

4. A compound according to Claim 1 in which at least one Q is 3,5,5-trimethylheriyl, 1,1,3,3-tetramethylbutyl, 2-ethylhexyl, 1-ethyl-3-methylpentyl, 1,5-dimethylhexyl, 1-methylheptyl, 1,4-dimethylheptyl, 1,2,2-trimethylpropyl, 2-ethylbutyl, 1-propylbutyl, 1,2-dimethylbutyl, 2-methylpentyl, 1-ethylpentyl, 1,4-dimethylpentyl, 1-methylhexyl, 3-methylhexyl, 1,3,3-trimethylbutyl, or 1-methylnonyl.

5. A compound according to any of Claims 1 to 4 in which three Qs are H.

6. A compound according to any of Claims 1 to 5 in which
R is H, C₁₋₄alkyl, C₁₋₄-alkoxy, NO₂, halo or CO₂A;
R² is OH or NH₂;
R³ is OH or NH₂; and
R⁴ is H or SO₃A.

7. A composition comprising a compound according to any preceding claim in which R is H, R² is NH₂, R³ is OH and R⁴ is H and a compound according to any preceding claim in which R is H, R² is OH, R³ is NH₂ and R⁴ is H.

8. A compound or composition according to any preceding claim for use in the preparation of inks for ink jet printing.

9. An ink comprising at least one compound according to any of Claims 1 to 8 and a C₁₋₄-alcohol and/or C₂₋₄-glycol.

10. An ink according to Claim 9 for use in ink jet printing.

## Patentansprüche

1. Verbindung mit der folgenden Formel (1): 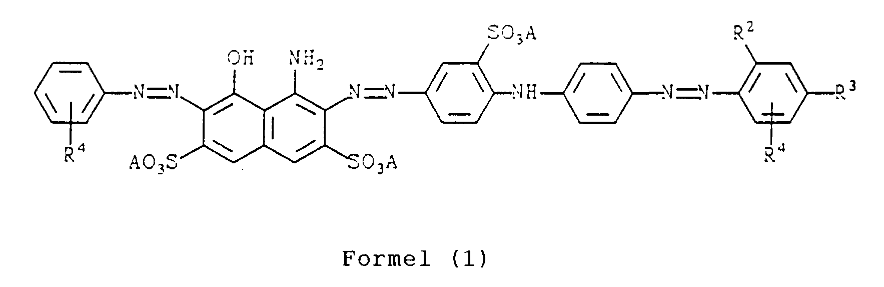 in der:
R für H, C₁₋₄-Alkyl, C₁₋₄-Alkoxy, Aryl, C₄₋₈-Cycloalkyl, -CN, -NO₂, Halogen, -COOR¹, -OH, -SH oder -SO₃A steht;
R¹ für A, C₁₋₄-Alkyl oder Aryl steht;
R² für -NH₂, -OH oder -SO₃A steht;
R³ für -NH₂ oder -OH steht;
R⁴ für -NH₂, -OH, -SO₃A oder H steht; und
A für NQ₄ steht, wobei mindestens ein Q für eine verzweigte C₆₋₂₀-fettaliphatische Gruppe steht und 2 oder 3 Qs jeweils unabhängig voneinander für H, C₁₋₄-Alkyl, Phenyl oder Benzyl stehen.

2. Verbindung nach Anspruch 1, wobei mindestens 1 Q für eine verzweigte C₆₋₁₂-fettaliphatische Gruppe steht.

3. Verbindung nach Anspruch 1, wobei mindestens 1 Q für eine verzweigte C₈₋₁₀-fettaliphatische Gruppe steht.

4. Verbindung nach Anspruch 1, wobei mindestens 1 Q für folgendes steht: 3,5,5-Trimethylhexyl, 1,1,3,3-Tetramethylbutyl, 2-Ethylhexyl, 1-Ethyl-3-methylpentyl, 1,5-Dimethylhexyl, 1-Methylheptyl, 1,4-Dimethylheptyl, 1,2,2-Trimethylpropyl, 2-Ethylbutyl, 1-Propylbutyl, 1,2-Dimethylbutyl, 2-Methylpentyl, 1-Ethylpentyl, 1,4-Dimethylpentyl, 1-Methylhexyl, 3-Methylhexyl, 1,3,3-Trimethylbutyl oder 1-Methylnonyl.

5. Verbindung nach einem der Ansprüche 1 bis 4, wobei 3 Qs für H stehen.

6. Verbindung nach einem der Ansprüche 1 bis 5, wobei
R für H, C₁₋₄-Alkyl, C₁₋₄-Alkoxy, NO₂, Halogen oder CO₂A steht;
R² für OH oder NH₂ steht;
R³ für OH oder NH₂ steht; und
R⁴ für H oder SO₃A steht.

7. Zusammensetzung, die eine Verbindung nach einem der vorhergehenden Ansprüche enthält, wobei R für H, R² für NH₂, R³ für OH und R⁴ für H steht, und eine Verbindung nach einem der vorhergehenden Ansprüche, wobei R für H, R² für OH, R³ für NH₂ und R⁴ für H steht.

8. Verbindung oder Zusammensetzung nach einem der vorhergehenden Ansprüche zur Verwendung bei der Herstellung von Tinten für den Tintenstrahldruck.

9. Tinte, die mindestens eine Verbindung nach einem der Ansprüche 1 bis 8 und einen C₁₋₄-Alkohol und/oder ein C₂₋₄-Glycol enthält.

10. Tinte nach Anspruch 9 zur Verwendung beim Tintenstrahldruck.

## Revendications

1. Composé de formule (1) : 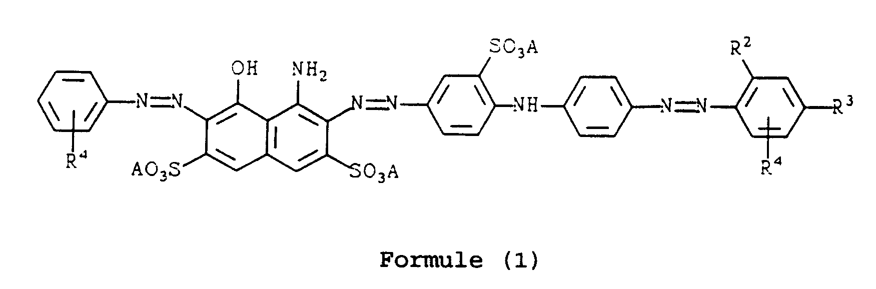 dans laquelle
R représente H, un groupe alkyle en C₁ à C₄, alkoxy en C₁ à C₄, aryle, cycloalkyle en C₄ à C₈, -CN, -NO₂, halogéno, -COOR¹, -OH, -SH ou -SO₃A ;
R¹ représente un groupe A, alkyle en C₁ à C₄ ou aryle ;
R² représente un groupe -NH₂, -OH ou -SO₃A ;
R³ représente un groupe -NH₂ ou -OH ;
R⁴ représente un groupe -NH₂, -OH, -SO₃A ou H ; et
A représente un groupe NQ₄ dans lequel au moins un groupe Q consiste en un groupe aliphatique gras en C₆ à C₂₀ à chaîne ramifiée et deux ou trois groupes Q représentent chacun indépendamment H, un groupe alkyle en C₁ à C₄, phényle ou benzyle.

2. Composé suivant la revendication 1, dans lequel au moins un groupe Q est un groupe aliphatique gras en C₆ à C₁₂ à chaîne ramifiée.

3. Composé suivant la revendication 1, dans lequel au moins un groupe Q est un groupe aliphatique en C₈ à C₁₀ à chaîne ramifiée.

4. Composé suivant la revendication 1, dans lequel au moins un groupe Q est un groupe 3,5,5-triméthylhexyle, 1,1,3,3-tétraméthylbutyle, 2-éthylhexyle, 1-éthyl-3-méthylpentyle, 1,5-diméthylhexyle, 1-methylheptyle, 1,4-diméthylheptyle, 1,2,2-triméthylpropyle, 2-éthylbutyle, 1-propylbutyle, 1,2-diméthylbutyle, 2-méthylpentyle, 1-éthylpentyle, 1,4-diméthylpentyle, 1-méthylhexyle, 3-méthylhexyle, 1,3,3-triméthylbutyle ou 1-méthylnonyle.

5. Composé suivant l'une quelconque des revendications 1 à 4, dans lequel trois groupes Q représentent H.

6. Composé suivant l'une quelconque des revendications 1 à 5, dans lequel
R représente H, un groupe alkyle en C₁ à C₄, alkoxy en C₁ à C₄, NO₂, halogéno ou CO₂A ;
R² représente un groupe OH ou NH₂ ;
R³ représente un groupe OH ou NH₂ ; et
R⁴ représente H ou un groupe SO₃A.

7. Composition comprenant un composé suivant l'une quelconque des revendications précédentes,dans lequel R représente H, R² représente un groupe NH₂, R³ représente un groupe OH et R⁴ représente H, et un composé suivant l'une quelconque des revendications précédentes dans lequel R représente H, R² représente un groupe OH, R³ représente un groupe NH₂ et R⁴ représente H.

8. Composé ou composition suivant l'une quelconque des revendications précédentes, destiné à être utilisé dans la préparation d'encres pour l'impression par jet d'encre.

9. Encre comprenant au moins un composé suivant l'une quelconque des revendications 1 à 8 et un alcool en C₁ en C₄ et/ou un glycol en C₂ à C₄.

10. Encre suivant la revendication 9, destinée à être utilisée dans l'impression par jet d'encre.
